# EUROPEAN PATENT SPECIFICATION

(11) **EP 2 171 402 B1**
(45) Date of publication and mention of the grant of the patent: **19.07.2017**
(21) Application number: 08789464.8
(22) Date of filing: 28.07.2008
(51) Int. Cl.: G01D 4/00, G06Q 50/06

(54) **METHOD, APPARATUS AND SYSTEM FOR USER-ASSISTED RESOURCE USAGE DETERMINATION**
VERFAHREN, VORRICHTUNG UND SYSTEM ZUR BESTIMMUNG BENUTZERUNTERSTÜTZTER RESSOURCENVERWENDUNGEN
PROCÉDÉ, APPAREIL ET SYSTÈME POUR UNE DÉTERMINATION D'USAGE DE RESSOURCE ASSISTÉE PAR L'UTILISATEUR

(30) Priority: 01.08.2007 EP 07113636
(43) Date of publication of application: 07.04.2010
(73) Proprietor: Philips Lighting Holding B.V., 5656 AE Eindhoven (NL)
(72) Inventor: DIGON, Martin, C., NL-5656 AE Eindhoven (NL); LEAHY, John, G., NL-5656 AE Eindhoven (NL)
(74) Representative: Uittenbogaard, Frank
(86) International application number: PCT/IB2008/053020
(87) International publication number: WO 2009/016580

(56) References cited:
- EP-A- 1 263 108
- US-A1- 2006 142 900
- PALENSKY P ET AL: "Demand side management in private homes by using LonWorks" FACTORY COMMUNICATION SYSTEMS, 1997. PROCEEDINGS. 1997 IEEE INTERNATIO NAL WORKSHOP ON BARCELONA, SPAIN 1-3 OCT. 1997, NEW YORK, NY, USA,IEEE, US, 1 October 1997 (1997-10-01), pages 341-347, XP010255516 ISBN: 978-0-7803-4182-1

## Description

### FIELD OF THE INVENTION

The present invention relates to a method and apparatus and system for user-assisted resource usage determination in a domestic setting.

### BACKGROUND OF THE INVENTION

A typical household or commercial/industrial location consumes energy and physical resources in the form of electricity, gas and/or water. The consumption of each one of these resources is usually monitored by a single meter at the entry point to the site. There is currently a desire, driven by governmental policy and social trends, to refine the metering process allowing consumers to identify which devices consume most resources.

Although it is relevant for a user to establish power consumption of a domestic appliance, knowledge of such power consumption data remains somewhat artificial; incomprehensible to users.

EP1263108 A discloses a method for intelligent scheduling of resource-demanding tasks, such that the demand for a particular resource does not exceed the available supply.

US 2006/142900 A1 discloses a method for monitoring power-consumption in a domestic environment on a per-device basis.

PALENSKY P ET AL: "Demand side management in private homes by using LonWorks" FACTORY COMMUNICATION SYSTEMS, 1997. PROCEEDINGS. 1997 IEEE INTERNATIONAL WORKSHOP ON BARCELONA, SPAIN 1-3 OCT. 1997, NEW YORK, NY, USA, IEEE, US, 1 October 1997 (1997-10-01), pages 341-347, XP010255516 ISBN: 978-0-7803-4182-1 discusses a variety of ways in which demand for energy may be managed in an intelligent manner, using intelligent appliances.

### SUMMARY OF THE INVENTION

It is a goal of the present invention to provide a method of user-assisted resource usage determination in a domestic setting that enables a more natural manner to provide insight in resource usage and user behavior.

This goal is realized using the method from the preamble further characterized in that it comprises: defining a resource consuming user activity by the user by means of a resource consuming user activity identifier, such as a free-form description or descriptive identifier; defining an interval for metering resource usage; determining the resource usage during the defined interval and storing and/or reporting information based on the determined resource usage, the defined interval and the association thereof with the resource consuming user activity identifier.

The present invention enables a user to establish more meaningful data regarding resource usage. The data acquired using the present invention directly links resource usage and user activities and as such provides a better understanding of resource usage. In this manner it becomes possible for a user to establish an understanding of the energy consumption of an evening watching television, preparing lunch, preparing dinner, or using electrical appliances in the garden.

By defining a resource consuming user activity using an identifier such as e.g. "preparing dinner", or "morning shower", and defining an interval for metering resource usage, e.g. using a start and end toggle representing the start and end of the activity, resource usage can be measured during the interval defined. Here resource usage may reflect a wide variety of consumable resources such as electrical energy, oil, water, and or liquid or gaseous fuel.

By storing and/or reporting information based on the measured resource usage, the defined interval and the association thereof with the resource consuming user activity identifier, a user may obtain an indication of the energy consumption in particular activities employed by the user. In this manner the energy consumption of particular activities can be made immediately clear, and may e.g. be used to amend behavior towards even more resource usage conscientious behavior.

In one embodiment of the present invention the user provides at least one additional attribute for the resource consuming user activity as defined by the resource consuming user activity identifier. The use of attribute is presented by means of a scenario for comparing different types of lunches. A first type of lunch represents a lunch comprising sandwiches, freshly brewed coffee and freshly pressed orange juice. A second type of lunch represents a pancake lunch with that involves the use of several kitchen appliances and the use of a stove.

In case of the first type of lunch the attributes may be indicative of the description of the articles of food involved and the settings used for the coffee maker, and the electrical fruit-press. In case of the second type of lunch the attributes may be indicative of the settings of the kitchen appliance, the number of pancakes, as well as the settings on the stove. It will be clear to the skilled person that the level of detail provided in the attributes will allow a more accurate comparison at the cost of complexity.

Attributes may comprise e.g. a user defined description of the activity, an activity class selected from a set of pre-determined or alternatively user-defined classes. The expected frequency of said activity over time, a preferred time-slot for said activity and/or parameters for further classifying the particular activities as described above.

Preferably attributes are stored together with the resource usage, the defined interval and the association thereof with the resource consuming user activity identifier. In fact the resource consuming user activity identifier in one particular embodiment can be a free-form description of the resource consuming user activity.

In one embodiment determining the resource usage comprises metering resource delivery by means of central consumable resource provision channels. This type of metering may e.g. comprise registering and communicating the consumption at the start of the activity and at the end of the activity and determining the difference there between. In this manner an estimate is formed of the resource usage of the activity in its entirety. It will be clear to the skilled person that in order to obtain reliable data the user should try to limit further unrelated non-continuous resource usage throughout the metering interval. Such resource usage, particularly in a centralized sensor approach, will affect accuracy of the acquired resource usage figures. Continuous resource usage is less bothersome as this can be factored out as indicated below.

The main advantage of a centralized approach is that it suffices to have a single metering device register resource usage of a particular resource channel. Alternative approaches are envisaged wherein at the start of an activity a counter is reset and subsequently increased or alternatively decreased during the metering interval depending on the monitored quantity.

In a further embodiment the method further comprises defining a user behavior profile based on resource consuming user activities. These activities preferably relate to defined resource usage activities that have been defined previously and for which resource usage data has been acquired.

Such user behavior profiles can be hierarchical profiles that allow users to define the activities of a user in a structured manner. Such profile can be used to enable extrapolation of (long-term) resource usage predictions based on measured resource usage. In this manner the present invention allows a user to establish a bottom-up energy dissipation estimate in a comparatively simple manner. This bottom up approach using activity based resource usage estimates provides a user with a more natural understanding of resource usage than summing up individual power consumption figures of domestic appliances.

The method according to the present invention may further be adapted to perform comparative studies between different user defined profiles.

In addition refinements are envisaged that may account for seasonal related variations that may be based on e.g. statistical data provided by utility companies.

In one embodiment the method further comprises acquiring historical resource usage data of the user and incorporating historical resource usage data in the extrapolation of long-term consumption predictions. In this manner the present invention may provide the user with an indication of the actual resource usage/energy bill in a billing period. As such the present invention may not only provide an aid in raising resource usage awareness, but also provides an opportunity to verify correctness the actual resource usage/energy bill at the end of the billing period.

In an embodiment of the present invention reporting the energy consumption is performed in an itemized manner at a granularity of the defined resource usage activities.

When comparing user behavior profiles, energy consumption may be reported in an aggregated manner, wherein selection of the energy consumption may allow a breakdown on user selection of the aggregated energy consumption data into individual resource usage activities, which may e.g. also indicate average frequency, average duration, etc.

In an embodiment resource usage is reported in the form of actual resource usage figures, alternatively or additionally energy consumption may be presented in the form of monetary equivalents based on current or expected resource prices.

The goal is further realized using an apparatus for user-assisted resource usage determination in a domestic setting, the apparatus comprising first definition means configured to enable a user to define a resource consuming user activity by means of a resource consuming user activity identifier, such as a free-form description or descriptive identifier; second definition means configured to enable definition of an interval for metering resource usage; obtaining means configured to obtain resource usage information during the defined interval; and processing means configured to store and/or report information based on the obtained resource usage information, the defined interval and the association thereof with the resource consuming user activity identifier.

Preferably the apparatus described above is used in a system for user-assisted resource usage determination in a domestic setting, the system further comprising at least one resource usage sensor. The apparatus and the at least one resource usage sensor arranged to communicate resource usage data from the sensor to the apparatus. It will be clear to the skilled person that this communication can be implemented as wired or wireless communication. Power-line communication is seen as a particularly advantageous form of wired communication in this respect, in particular for reporting electrical energy consumption. Alternatively wireless communication schemes can be applied to enable communication between the apparatus and the at least one sensor.

In one embodiment determining the resource usage comprises metering resource delivery by means of distributed sensors. Which sensors are involved can be indicated by attributing parameters to that extend to the activity or alternatively might be detected automatically as a result of activation of devices after the activity start has been registered. Distributed sensors can be provided at mains outlets such as wall-sockets, or alternatively by fitting wall-sockets with a wall-socket adapter, or by using an extension cord equipped with a resource usage sensor.

It will be clear that although the present invention focuses on the definition of resource usage activities by the user. However in a distributed resource usage sensor approach the actual underlying resource usage determination may be performed at a finer granularity, partially or entirely. Intermediate forms between centralized and distributed sensor approaches can also be envisaged. For example when establishing the resource usage for preparing dinner, particular devices such as the microwave oven and the waste disposal unit may be metered individually in addition to monitoring the resource usage centrally. In this hybrid scenario, the resource usage of the microwave is metered separately and can be thus be deducted from the total aggregate. As a result the resource usage for this activity may be further broken down for the user when there is a need to do so, for example when attempting to assess potential resource usage savings within the dinner preparation context.

### BRIEF DESCRIPTION OF THE DRAWINGS

These and other advantageous aspects of the invention will be described in more detail using the following Figures.
Fig. 1A, shows a report generated using an embodiment of the present invention;
Fig. 1B, shows a user interface for designating sensors to an activity;
Fig. 2, shows an apparatus and system according to the present invention;
Fig. 3, shows a flow-chart of a method according to the present invention;
Fig. 4, shows a block diagram of an apparatus according to the present invention;
Fig. 5, shows a user interface for defining a user profile; and
Fig. 6, shows a further report generated using an embodiment of the present invention.

The Figures are not drawn to scale. Generally, identical components are denoted by the same reference numerals in the Figures.

### DETAILED DESCRIPTION OF EMBODIMENTS

Within the context of the present invention a user activity is understood to be an activity undertaken by a user that extends over the measurement of power dissipation of an electrical shaver. A resource consuming user activity in the context of the present invention is considered to be more than monitoring the usage of a single resource.

On a first level of abstraction the term user activity in the context of the present invention is understood to comprise the aggregated resource usage of multiple resources of an activity. An example of such a user activity is e.g. washing linens. Resource usage associated with this user activity is considered to comprise both electricity and water usage.

On a second level of abstraction the term user activity in the context of the present invention further relates to more conceptual user activities, such as e.g. getting ready for work in the morning, preparing dinner, or spending an evening at home watching television. These user activities typically comprise multiple appliances using multiple resources. In case of spending an evening watching television, this might comprise making coffee, popping pop-corn using a microwave oven, preparing a few drinks using a blender, watching a movie from the hard disk recorder, playing music on a stereo and having several lights on near the television. In addition this particular user activity also comprises some more unexpected resource usage such as flushing the toilet, washing hands, washing up, brushing your teeth and taking a shower before going to bed.

### Centralized and/or distributed sensors

The present invention can be applied to systems that use centralized and/or distributed sensors.

A centralized approach however has some advantages over the distributed approach. In a centralized sensor approach resource usage is determined using sensors on central consumable resource provision channels, such the electricity or water mains. In a centralized approach it is possible to accurately track the total resource usage. Moreover there is no need to designate particular resource usage sensors in devices, wall-sockets, or other groups involved in the user activity. In a centralized approach the number of sensors is limited and there is no need to upgrade e.g. wall-sockets, place wall-socket adaptors, or to purchase networked devices that provide on board resource usage metering.

Although the present invention may be applied in the context of networked appliances in a home network, i.e. appliances that can be controlled from e.g. a home central or the internet, the present invention may also be applied in a home that comprises legacy devices.

In a centralized sensor approach the differences in resource usage between the activity start and activity end the resource usage of the activity can be estimated. It will be clear to the skilled person that the resource usage established in this manner is an estimate of the actual resource usage. Household appliances that are always active and that continuously use resources such as refrigerators and/or central heating will also be part of the thus acquired resource usage.

Provided that the resource usage being metered is small in comparison to the activity being metered this may not be an issue. However in case the continuous resource usage is more substantial it may be necessary to assess the continuous resource usage, prior to and/or after the activity being metered. By establishing an average resource usage over a reference period and scaling this proportional to the activity metering interval an estimate can be generated of the continuous resource usage during the activity. This in turn can be subtracted from the activity resource usage measurement. Alternatively it can be reported separately to indicate to the user the ratio of continuous and activity-related resource usage.

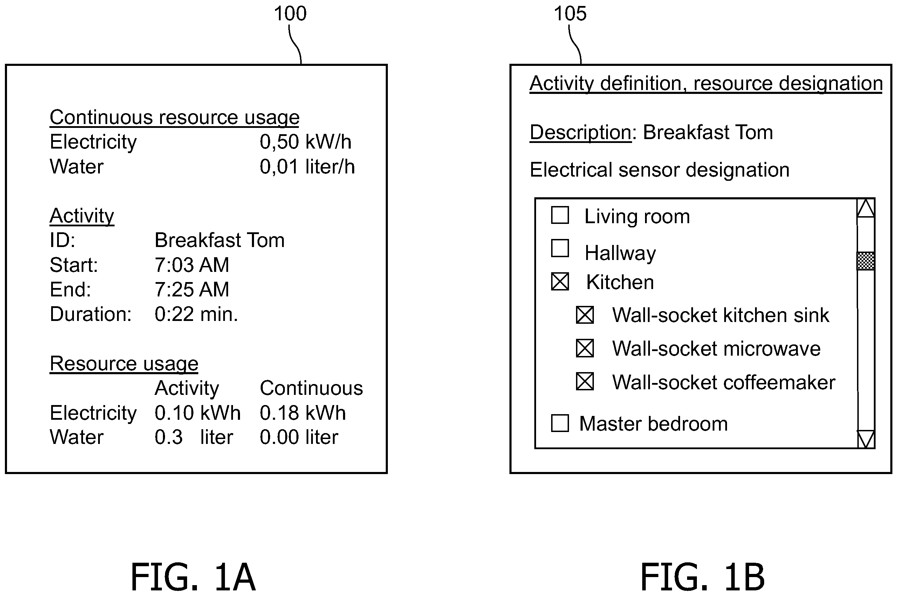

Fig. 1A depicts a report 100 generated using an embodiment of the present invention that actively monitors continuous resource usage. The report lists instantaneous continuous resource usage, the estimated continuous resource usage during the activity as well as the activity related resource usage.

In contrast a distributed sensor approach allows the user to define an activity in more detail by designating e.g. groups within the electrical sub-system of a house that are involved in a particular activity, or by designating the individual sensors involved in an user activity once. Once a user has defined an activity it is possible to determine the actual resource usage of a particular activity in a more detailed manner than in a centralized sensor approach.

Fig. 1B shows an image of a user interface that may be used for designating electrical sensors during the user activity definition. Once an activity is defined it will be possible to assess resource usage using this activity definition.

It will be clear to the skilled person that the accuracy of the activity based resource usage in a distributed sensor approach is co-dependent on the accuracy of the designation of resource usage sensors.

### Interval definition

A method according to the present invention comprises a step for defining an interval for metering resource usage. This interval effectively signifies the start and end of a resource consuming user activity and therefore also of the measurement. It is envisaged that a user can define the interval by entering a start and stop time of the activity, or alternatively a start time and duration of the activity. More alternatively in case the present invention is used in an environment comprising networked domestic appliances that are controlled using a central controller, the activity can be defined by means of two events in the domestic network, such as switching on the coffee maker, and the dishwasher reporting it finished its program.

### System

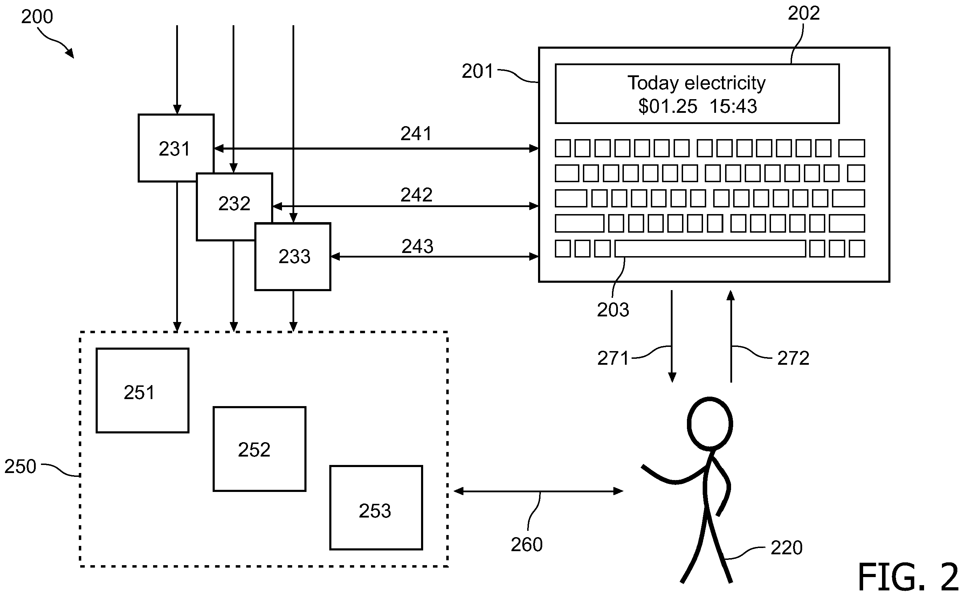

Fig. 2 shows a system 200 for user-assisted resource usage determination in a domestic setting comprising an apparatus 201. The system 200 comprises three centralized resource usage sensors 231, 232, and 233 for sensing resource usage of appliances 251, 252 and 253 involved in a user activity indicated by the dashed box 250. Strictly speaking the appliances 251, 252, and 253 as well as the user 220 are not part of the system according to the present invention.

The user 220 uses the apparatus 201 for user-assisted resource usage determination to define a resource consuming user activity by entering and/or selecting 272 the appropriate user activity identifier using the user interface 203. The apparatus 201 further comprises a display 202 in order to provide the user with feedback 271. In addition the user defines an interval for example by defining an activity start time and an activity end time.

Next the user can interact 260 with the appliances 251, 252, 253. The sensors 231, 232, and 233 will acquire resource usage information and communicate this information through the respective communication channels 241, 242 and 243. The communications could be in the form of a single figure indicative of the total power dissipated during the interval, or could alternatively be the total power usage counter at the start time and that at the stop time. More alternatively these communications may comprise metering pulses, such that the actual accumulation of the metering pulses is handled by the apparatus 201.

The advantage of using metering pulses, and/or providing intermediate resource usage information is that this information can be processed and reported to the user during the actual activity. As a result the user can use the apparatus 201 to verify the status, and or obtain the intermediate results.

Finally the information acquired by the apparatus 201 in the form of the determined resource usage, the defined interval and the association thereof with the resource consuming user activity identifier can be reported to the user by means of the display 202 and/or stored in the apparatus 201 or a remote storage for future reference.

It will be clear to the skilled person that configurations different from the centralized sensor system as depicted in Fig. 2 are also envisaged. Moreover in a preferred embodiment the apparatus 201 is a portable device.

### Method

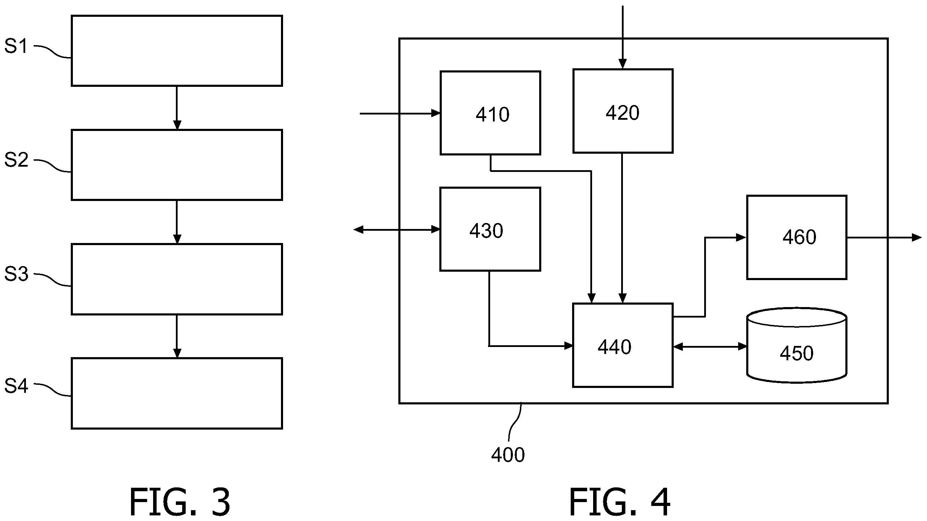

Fig. 3 shows a flowchart of a method according to the present invention of user-assisted resource usage determination in a domestic setting. In a first step S1 a resource consuming user activity is defined by the user by means of a resource consuming user activity identifier. This identifier can be a pointer, in the form of e.g. a reference number, indicative of a record comprising a resource consuming user activity or may alternatively be a descriptive identifier of the resource consuming user activity.

In a second step S2 an interval is defined for metering resource usage. This interval can be defined using absolute time, e.g. using an activity start time and an activity end time, or can alternatively be defined in the form of events, such as an event starting a coffee-maker and an event corresponding to the dish-washer finalizing its wash-cycle.

In a third step S3 resource usage is determined in the defined interval. This step involves the actual acquisition of resource usage measurement information corresponding to the user activity.

In a fourth and final step S4 the determined resource usage, the defined interval and the association thereof with the resource consuming user activity identifier are stored for future reference or alternatively are reported to the user.

### Apparatus

Fig. 4 shows an apparatus 400 according to the present invention. The apparatus 400 comprises a first definition means 410 configured to enable a user to define a resource consuming user activity by means of a resource consuming user activity identifier. In addition the apparatus 400 further comprises a second definition means 420 configured to enable definition of an interval for metering resource usage as well as an obtaining means 430 configured to obtain resource usage information during the defined interval.

The obtaining means 430 typically is a communication means configured to communicate with one or more remote resource usage sensors. By using such communication means the user can roam freely and interact with, potentially distributed, appliances being monitored.

The apparatus 400 further comprises a processing means 440 configured to store the obtained resource usage information, the defined interval and the association thereof with the resource consuming user activity identifier on a storage means 450. Alternatively the processing means 440 can report the information to the user by means of a reporting means 460. It will be clear to the skilled person that although Fig. 4 shows the storage means 450 located within the apparatus 400, the storage means may also be located elsewhere e.g. on a storage device in a home network (not shown).

An apparatus according to the present invention can be configured to communicate with intelligent sensors that can perform resource usage measurements in intervals, or alternatively could receive pulses indicative of resource usage and perform the actual accumulation of these pulses.

An apparatus according to the present invention can be implemented primarily in hardware, e.g. using one or more Application Specific Integrated Circuits (ASICs) or could alternatively be implemented on a programmable hardware platform such as a PDA or a smart phone. It will be clear to the skilled person that many variations in hardware/software partitioning can be envisaged.

Although an apparatus according to the present invention preferably is a handheld device, the present invention may also be implemented on a Personal Computer without departing from the scope of the present invention.

### Post-processing

The present invention enables a user to assess resource usage in a domestic setting. In order to further stimulate the user to use resources sparingly further advantageous embodiments are provided that enable a simple and fast comparison of resource usage.

In one embodiment a user can define a user profile that allows the user to specify behavior of a user by means of energy consuming user activities. Such a profile can be used to extrapolate resource usage based on the behavior as specified by the profile. Profiles allow a simple and efficient summation and comparison of resource usage at an even higher abstraction level. A profile can be e.g. a week-based profile wherein a user provides activities by selection of resource consuming user activities for which resource usage figures are available.

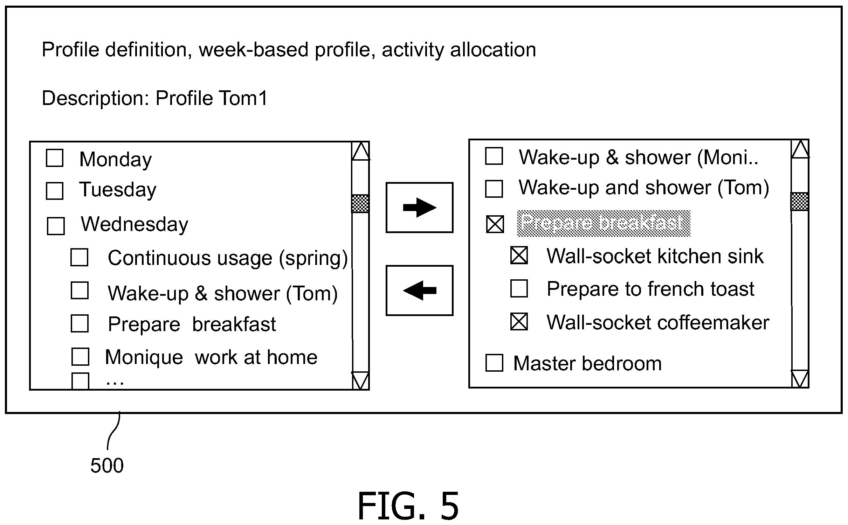

Fig. 5 presents a user interface for selecting activities from a list of activities (right hand side). On selection activities on the right hand side window can be selected and added to the profile on the left hand side. The activity can be added to individual week days or to all days.

When a user wants to compare the implications of a particular behavior on resource usage the user can create several alternative measurements for a particular user activity. These alternatives would then show up in the activity overview on the right hand window of Fig. 5. By creating different profiles incorporating the different activities alternatives can easily be compared.

In order to create a more realistic approximation, which is particularly useful when attempting to model resource usage accurately rather than performing a comparative study, it may be necessary to incorporate a continuous resource activity in the profile in order to model continuous resource usage as indicated in the left-hand side window of Fig. 5. Continuous resource usage may also incorporate seasonal influences as indicated in Fig. 5 by the qualifier "spring" between parentheses. A continuous resource using activity can be modeled by sampling resource usage on a representative day, and including this as an activity or several activities grouped in a continuous resource usage profile into the user profile.

Moreover when the present invention is used to provide an estimate of the yearly resource bill it is further possible to include historical resource usage data, i.e. historical data describing the resource usage from the start of a billing period to the present. Subsequently a user selected user profile can be used to extrapolate the resource usage for the remainder of the billing period. In this manner a more reliable tracking of the resource usage/energy bill is made possible.

In order to simplify the definition of user profiles, user profiles are preferably hierarchical manner allowing particular allowing daily profiles of various co-inhabitants to be aggregated into weekly, monthly, and/or yearly profiles.

### Reporting

The present invention can provide consumers with a better understanding of their personal resource usage and help them in selecting and/or developing a more sustainable life-style. As an additional bonus there is an economic incentive in that the present invention also enables cost-saving by means of stimulating more energy efficient behavior.

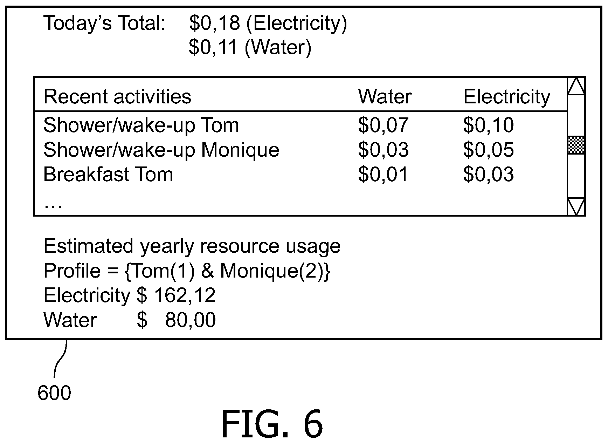

An important aspect of the present invention is reporting the actual resource usage to the user. Fig. 6 provides an exemplary report 600 of information that can be provided to the user. This information may e.g. comprise information regarding the daily resource usage (at the top of the report 600) which may be acquired by requesting the total accumulated resource usage as registered by the resource usage sensors on a daily basis and storing this information.

In addition Fig. 6 provides information regarding recent activities that have been assessed using the apparatus such as a comparison of two shower/wake-up rituals in this case of Tom and Monique. The bottom part of the report 600 further provides estimates for the yearly resource usage based on the profile named "Tom(1) & Monique (2)".

In particular for resource usage predictions and comparisons the use of monetary equivalents representing the cost of the resources used, rather than the actual resource usage figures have proven to be more comprehensible for users.

Utility companies and or governmental agencies can further provide additional statistical data that can be used in conjunction with the present invention. Such data may e.g. allow a user to compare his resource usage with that of further users at a local, regional, and/or national level.

Although in the above examples the reporting is handled by the apparatus for user-assisted resource usage determination it will be clear to the skilled person that the present invention may also allow the apparatus for user-assisted resource usage determination to be docked or remotely connected to a personal computer for further post-processing and reporting of the acquired data.

### Measurement technologies

The present invention enables a user to monitor resource usage on a user activity level. The sensors underlying the actual monitoring of resource usage applied can be selected from a wide variety of resource usage sensors.

In case of electrical energy usage these sensors may comprise low resistance shunts for use in current measurement.

Alternatively a field based current transformer can be used for current measurement. In a closely-coupled current transformer or CT, the field in a permeable core is cancelled by current flowing in a secondary winding on the core with many more turns than the primary. This much lower secondary current is measured using a small shunt (or load) resistor.

More alternatively current measurement can be done using the Hall-effect. A Hall-effect device can measure the field directly, generally using suitable magnetic pole fragments to direct the flux through the device.

Yet more alternatively current measurement may be based on the Rogowski coil field method for current measurement. In accordance with this method an air-cored toroid is placed around straight conductor. The alternating magnetic field produced by the current induces a voltage in the coil which is proportional to the rate of change of current. An integrator is required to recover current.

### Communication technologies

In both distributed and centralized sensor networks sensors are preferably connected to an apparatus according to the present invention using a wireless channel. A wide variety of communication schemes can be used such as IEEE 802.11 like communication schemes. Alternatively the Bluetooth™ protocol can be used to implement the wireless channel. More alternatively the communication link can be constructed using an IEEE 802.15.4 like communication scheme.

In particular for electrical energy usage the use of power line communication schemes may also be advantageous as such devices tend to be connected by means of power lines.

Although the present invention refers to resource consuming user activities, such activities not only cover activities of a single person, but also are understood to comprise user activities involving multiple users.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

It will be clear that within the framework of the invention many variations are possible. It will be appreciated by persons skilled in the art that the present invention is not limited by what has been particularly shown and described hereinabove. The invention resides in each and every novel characteristic feature and each and every combination of characteristic features. Reference numerals in the claims do not limit their protective scope.

## Claims

1. A method of user-assisted resource usage determination in a domestic setting, the method comprising:
- defining (S1), by a user, a resource consuming user activity by means of a resource consuming user activity identifier, such as a free-form description or descriptive identifier;
- defining (S2) an interval for metering resource usage;
- determining (S3) the resource usage during the defined interval; and
- storing and/or reporting (S4) information based on the determined resource usage, the defined interval and the association thereof with the resource consuming user activity identifier.

2. The method of claim 1, further comprising:
- providing attributes for the resource consuming user activity identifier defined by the user.

3. The method of claim 2, wherein the attributes comprise at least one of:
- a designation of resource usage sensors involved in the activity;
- a user defined description of the activity;
- an activity class;
- a frequency of said activity over time;
- a preferred time-slot for said activity; and
- parameters classifying the activity.

4. The method of claim 1, wherein determining the resource usage comprises metering resource delivery by means of central consumable resource provision channels.

5. The method of claim 1, wherein the consumable resources comprise at least one of: electricity; oil, liquid fuel, gaseous fuel, and water.

6. The method of claim 1, further comprising at least one of:
- defining a user behavior profile based on resource usage activities;
- extrapolating resource usage predictions based on the measured resource usage, the defined interval and the association with the resource consuming user activity; and
- defining a user behavior profile based on resource usage activities and extrapolating consumption predictions based on the user behavior profile and measured resource usage, the defined interval and the association with the resource consuming user activity.

7. The method of claim 1, further comprising:
- acquiring historical resource usage data;
- incorporating the acquired historical resource usage data in the extrapolation of resource usage predictions.

8. The method of claim 1, further comprising at least one of the following steps:
- reporting the energy consumption in an itemized manner based on the defined resource usage activities;
- reporting the energy consumption in an aggregated manner;
- reporting the energy consumption in the form of resource usage and
- reporting the energy consumption in the form monetary equivalents.

9. An apparatus (400, 201) for user-assisted resource usage determination in a domestic setting, the apparatus comprising:
- first definition means (410) configured to enable a user to define a resource consuming user activity by means of a resource consuming user activity identifier, such as a free-form description or descriptive identifier,
- second definition means (420) configured to enable definition of an interval for metering resource usage;
- obtaining means (430) configured to obtain resource usage information during the defined interval; and
- processing means (440) configured to store and/or report information based on the obtained resource usage information, the defined interval and the association thereof with the resource consuming user activity identifier.

10. The apparatus of claim 9, further comprising:
- attribution means configured to provide attributes for the resource consuming user activity defined by the user.

11. The apparatus of claim 9, wherein the obtaining means comprises communication means configured to communicate with a resource usage sensor (231, 232, 233).

12. A system (200) for user-assisted resource usage determination in a domestic setting, the system comprising:
- an apparatus (201, 400) according to claim 11; and
- a resource usage sensor (231, 232, 233),
the apparatus and the resource usage sensor arranged to communicate resource usage data from the sensor to the apparatus.

13. The system according to claim 12, the system (200) comprising at least one resource usage sensor metering electricity delivery over at least one of:
- a central electricity line of the premises;
- a wall-socket;
- a wall-socket adapter; and
- an extension cord.

14. The system according to claim 12 or 13, wherein communication between the apparatus according to claim 11 and the resource usage sensor uses one of:
- power line communication;
- wireless communication.

## Patentansprüche

1. Verfahren zur Ermittlung benutzerunterstützter Ressourcennutzung in einem häuslichen Bereich, wobei das Verfahren die folgenden Schritte umfasst, wonach:
- von einem Benutzer eine Ressourcen verbrauchende Benutzeraktivität mit Hilfe einer Kennung der Ressourcen verbrauchenden Benutzeraktivität, wie beispielsweise einer formatfreien Beschreibung oder beschreibenden Kennung, definiert wird (S1);
- ein Intervall zur Messung der Ressourcennutzung definiert wird (S2);
- die Ressourcennutzung während des definierten Intervalls ermittelt wird (S3); und
- Informationen, die auf der ermittelten Ressourcennutzung, dem definierten Intervall und der Zuordnung desselben zu der Kennung der Ressourcen verbrauchenden Benutzeraktivität basieren, gespeichert und/oder dargestellt werden (S4).

2. Verfahren nah Anspruch 1, wonach weiterhin:
- von dem Benutzer definierte Attribute für die Kennung der Ressourcen verbrauchenden Benutzeraktivität vorgesehen werden.

3. Verfahren nach Anspruch 2, wobei die Attribute mindestens eine(einen) der folgenden umfassen:
- eine Benennung von Ressourcennutzungssensoren, die in die Aktivität einbezogen sind;
- eine benutzerdefinierte Beschreibung der Aktivität;
- eine Aktivitätsklasse;
- eine Frequenz der Aktivität im Zeitablauf;
- einen bevorzugten Zeitschlitz für die Aktivität; sowie
- Parameter, welche die Aktivität klassifizieren.

4. Verfahren nach Anspruch 1, wobei das Ermitteln der Ressourcennutzung das Messen der Ressourcenbereitstellung mit Hilfe von zentralen Verbrauchsressourcenbereitstellungs-Kanälen.

5. Verfahren nach Anspruch 1, wobei die Verbrauchsressourcen mindestens eine(einen) der folgenden umfassen: Elektrizität, Öl, flüssigen Brennstoff, gasförmigen Brennstoff und Wasser.

6. Verfahren nach Anspruch 1, wobei weiterhin zumindest:
- ein Benutzerverhaltensprofil aufgrund von Ressourcennutzungsaktivitäten definiert wird;
- Ressourcennutzungsvorhersagen aufgrund der gemessenen Ressourcennutzung, des definierten Intervalls und der Zuordnung zu der Ressourcen verbrauchenden Benutzeraktivität extrapoliert werden; und
- ein Benutzerverhaltensprofil aufgrund von Ressourcennutzungsaktivitäten definiert wird und Verbrauchsvorhersagen aufgrund des Benutzerverhaltensprofils und der gemessenen Ressourcennutzung, des definierten Intervalls und der Zuordnung zu der Ressourcen verbrauchenden Benutzeraktivität extrapoliert werden.

7. Verfahren nach Anspruch 1, wobei weiterhin:
- historische Ressourcennutzungsdaten erfasst werden;
- die erfassten historischen Ressourcennutzungsdaten in die Extrapolation von Ressourcennutzungsvorhersagen integriert werden.

8. Verfahren nach Anspruch 1, das weiterhin mindestens einen der folgenden Schritte umfasst, wonach:
- der Energieverbrauch in aufgegliederter Weise aufgrund der definierten Ressourcennutzungsaktivitäten dargestellt wird;
- der Energieverbrauch in zusammengefasster Form dargestellt wird;
- der Energieverbrauch in Form von Ressourcennutzung dargestellt wird und
- der Energieverbrauch in Form monetärer Äquivalente dargestellt wird.

9. Vorrichtung (400, 201) zur Ermittlung benutzerunterstützter Ressourcennutzung in einem häuslichen Bereich, wobei die Vorrichtung umfasst:
- erste Definitionsmittel (410), die so konfiguriert sind, dass sie es einem Benutzer ermöglichen, eine Ressourcen verbrauchende Benutzeraktivität mit Hilfe einer Kennung der Ressourcen verbrauchenden Benutzeraktivität, wie beispielsweise einer format-freien Beschreibung oder beschreibenden Kennung, zu definieren;
- zweite Definitionsmittel (420), die so konfiguriert sind, dass sie eine Definition eines Intervalls zur Messung der Ressourcennutzung ermöglichen;
- Empfangsmittel (430), die so konfiguriert sind, dass sie Ressourcennutzungsinformationen während des definierten Intervalls erhalten; sowie
- Verarbeitungsmittel (440), die so konfiguriert sind, dass sie Informationen, die auf den erhaltenen Ressourcennutzungsinformationen, dem definierten Intervall und der Zuordnung desselben zu der Kennung der Ressourcen verbrauchenden Benutzeraktivität basieren, speichern und/oder darstellen.

10. Vorrichtung nach Anspruch 9, die weiterhin umfasst:
- Zuordnungsmittel, die so konfiguriert sind, dass sie von dem Benutzer definierte Attribute für die Ressourcen verbrauchende Benutzeraktivität bereitstellen.

11. Vorrichtung nach Anspruch 9, wobei die Empfangsmittel Kommunikationsmittel umfassen, die so konfiguriert sind, dass sie mit einem Ressourcennutzungssensor (231, 232, 233) kommunizieren.

12. System (200) zur Ermittlung benutzerunterstützter Ressourcennutzung in einem häuslichen Bereich, wobei das System umfasst:
- eine Vorrichtung (201, 400) nach Anspruch 11; sowie
- einen Ressourcennutzungssensor (231, 232, 233),
wobei die Vorrichtung und der Ressourcennutzungssensor so eingerichtet sind, dass sie Ressourcennutzungsdaten von dem Sensor zu der Vorrichtung übertragen.

13. System nach Anspruch 12, wobei das System (200) mindestens einen Ressourcennutzungssensor umfasst, der die Elektrizitätszufuhr über mindestens eine(einen) der folgenden misst:
- eine zentrale Elektrizitätsleitung des Gebäudes;
- eine Wandsteckdose;
- einen Steckdosendadapter; und
- ein Verlängerungskabel.

14. System nach Anspruch 12 oder 13, wobei es sich bei der Kommunikation zwischen der Vorrichtung nach Anspruch 11 und dem Ressourcennutzungssensor um eine der folgenden handelt:
- Datenübertragung über das Stromnetz;
- drahtlose Kommunikation.

## Revendications

1. Procédé de détermination d'utilisation de ressource assistée par utilisateur dans un environnement domestique, le procédé comprenant :
- la définition (S1), par un utilisateur, d'une activité d'utilisateur à consommation de ressource au moyen d'un identifiant d'activité d'utilisateur à consommation de ressource, comme une description de forme libre ou un identifiant descriptif ;
- la définition (S2) d'un intervalle pour mesurer une utilisation de ressource ;
- la détermination (S3) de l'utilisation de ressource au cours de l'intervalle défini ; et
- la mémorisation et/ou le rapport (S4) d'informations sur la base de l'utilisation de ressource déterminée, de l'intervalle défini et de l'association de ceux-ci à l'identifiant d'activité d'utilisateur à consommation de ressource.

2. Procédé selon la revendication 1, comprenant en outre :
- la fourniture d'attributs pour l'identifiant d'activité d'utilisateur à consommation de ressource défini par l'utilisateur.

3. Procédé selon la revendication 2, dans lequel les attributs comprennent au moins l'un de :
- une désignation de capteurs d'utilisation de ressource impliqués dans l'activité ;
- une description définie par utilisateur de l'activité ;
- une classe d'activité ;
- une fréquence de ladite activité dans le temps ;
- un créneau de temps préféré pour ladite activité ; et
- des paramètres de classification de l'activité.

4. Procédé selon la revendication 1, dans lequel la détermination de l'utilisation de ressource comprend la mesure d'une livraison de ressource au moyen de canaux de fourniture de ressource consommable.

5. Procédé selon la revendication 1, dans lequel les ressources consommables comprennent au moins l'un de : électricité, huile, carburant liquide, combustible gazeux et eau.

6. Procédé selon la revendication 1, comprenant en outre au moins l'une de :
- la définition d'un profil de comportement d'utilisateur sur la base d'activités d'utilisation de ressource ;
- l'extrapolation de prédictions d'utilisation de ressource sur la base de l'utilisation de ressource mesurée, de l'intervalle défini et de l'association à l'activité d'utilisateur à consommation de ressource ; et
- la définition d'un profil de comportement d'utilisateur sur la base d'activités d'utilisation de ressource et l'extrapolation de prédictions de consommation sur la base du profil de comportement d'utilisateur et de l'utilisation de ressource mesurée, de l'intervalle défini et de l'association à l'activité d'utilisateur à consommation de ressource.

7. Procédé selon la revendication 1, comprenant en outre :
- l'acquisition de données d'utilisation de ressource historiques ;
- l'incorporation des données d'utilisation de ressource historiques acquises dans l'extrapolation de prédictions d'utilisation de ressource.

8. Procédé selon la revendication 1, comprenant en outre au moins l'une des étapes suivantes :
- le rapport de la consommation d'énergie d'une manière détaillée sur la base des activités d'utilisation de ressource définies ;
- le rapport de la consommation d'énergie d'une manière cumulée ;
- le rapport de la consommation d'énergie sous la forme d'une utilisation de ressource ; et
- le rapport de la consommation d'énergie sous la forme d'équivalences monétaires.

9. Appareil (400, 201) de détermination d'utilisation de ressource assistée par utilisateur dans un environnement domestique, l'appareil comprenant :
- un premier moyen de définition (410) configuré pour permettre à un utilisateur de définir une activité d'utilisateur à consommation de ressource au moyen d'un identifiant d'activité d'utilisateur à consommation de ressource, comme une description de forme libre ou un identifiant descriptif ;
- un deuxième moyen de définition (420) configuré pour permettre la définition d'un intervalle pour mesurer une utilisation de ressource ;
- un moyen d'obtention (430) configuré pour l'obtention d'informations d'utilisation de ressource au cours de l'intervalle défini ; et
- un moyen de traitement (440) configuré pour la mémorisation et/ou le rapport d'informations sur la base des informations d'utilisation de ressource obtenues, de l'intervalle défini et de l'association de ceux-ci à l'identifiant d'activité d'utilisateur à consommation de ressource.

10. Appareil selon la revendication 9, comprenant en outre :
- un moyen d'attribution configuré pour la fourniture d'attributs pour l'activité d'utilisateur à consommation de ressource définie par l'utilisateur.

11. Appareil selon la revendication 9, dans lequel le moyen d'obtention comprend un moyen de communication configuré pour la communication avec un capteur d'utilisation de ressource (231, 232, 233).

12. Système (200) de détermination d'utilisation de ressource assistée par utilisateur dans un environnement domestique, le système comprenant :
- un appareil (201, 400) selon la revendication 11 ; et
- un capteur d'utilisation de ressource (231, 232, 233),
l'appareil et le capteur d'utilisation de ressource étant agencés pour communiquer des données d'utilisation de ressource du capteur à l'appareil.

13. Système selon la revendication 12, le système (200) comprenant au moins un capteur d'utilisation de ressource mesurant une fourniture d'électricité sur au moins l'un de :
- une ligne électrique centrale des locaux ;
- une prise murale ;
- un adaptateur de prise murale ; et
- une rallonge.

14. Système selon la revendication 12 ou 13, dans lequel une communication entre l'appareil selon la revendication 11 et le capteur d'utilisation de ressource utilise l'une de :
- une communication de ligne électrique ;
- une communication sans fil.
